# EUROPEAN PATENT APPLICATION

(11) **EP 4 757 059 A1**
(43) Date of publication of application: **10.06.2026**
(21) Application number: 24848835.5
(22) Date of filing: 09.07.2024
(51) Int. Cl.: H01M 50/586, H01M 4/139, H01M 10/052, H01M 10/0587, H01M 50/531, H01M 50/595

(54) **NON-AQUEOUS ELECTROLYTE SECONDARY BATTERY**

(30) Priority: 31.07.2023 JP 2023123936
(71) Applicant: Panasonic Intellectual Property Management Co., Ltd., Kadoma-shi, Osaka 571-0057 (JP)
(72) Inventor: OKUNO Morihiko, Kadoma-shi, Osaka 571-0057 (JP)
(74) Representative: Eisenführ Speiser
(86) International application number: PCT/JP2024/024677
(87) International publication number: WO 2025/028176

(57) **Abstract**

This non-aqueous electrolyte secondary battery (10) comprises an electrode body (14) in which a strip-shaped positive electrode sheet (11) and a strip-shaped negative electrode sheet (12) are wound in a spiral shape along the longitudinal direction of the electrode sheets with a separator (13) interposed therebetween. The positive electrode sheet (11) has a positive electrode core body (11A) and a positive electrode mixture layer (11B) that is formed on the surface of the positive electrode core body (11A). In a longitudinally intermediate portion of the positive electrode sheet (11), a rectangular exposed portion (11C) in which the positive electrode core body (11A) is exposed is formed in a portion that is in contact with only one end out of both ends in the short-side direction of the electrode sheet. The exposed portion (11C) and a portion of the positive electrode mixture layer (11B) that is adjacent to the outer edge portion of the exposed portion (11C) are covered by a tape (30), and the corner portion of the tape (30) on the other end side in the short-side direction of the electrode plate is chamfered.

## Description

### TECHNICAL FIELD

The present disclosure relates to a non-aqueous electrolyte secondary battery.

### BACKGROUND ART

As non-aqueous electrolyte secondary batteries, for example, lithium-ion batteries and the like have been publicly known. The non-aqueous electrolyte secondary battery comprises an electrode assembly that includes a positive electrode plate and a negative electrode plate that are wound together with a separator interposed therebetween. The positive electrode plate includes a positive electrode core, and a positive electrode mixture layer formed on a surface of the positive electrode core.

For example, in a non-aqueous electrolyte secondary battery disclosed in PATENT LITERATURE 1, a rectangular exposed part where a positive electrode core is exposed is formed at a portion in contact only with one end between the opposite ends of the positive electrode plate in an electrode plate short transverse direction, a positive electrode tab for collecting current is joined to the exposed part, and the exposed part is covered with tape.

### CITATION LIST

### PATENT LITERATURE

PATENT LITERATURE 1: Japanese Unexamined Patent Application Publication No. 2004-311282

### SUMMARY

In the non-aqueous electrolyte secondary battery in PATENT LITERATURE 1, the tape is pasted to a portion of the positive electrode mixture layer around the exposed part along with this exposed part. During battery charging and discharging, the portion of the positive electrode mixture layer to which the tape is pasted receives the tensile stress by the tape due to expansion and contraction of the positive electrode plate. In particular, the tensile stress is concentrated at portions of the positive electrode mixture layer to which the corner parts of the tape are pasted, which sometimes makes the positive electrode mixture layer come off or cracked. In this case, there is a possibility that the battery characteristics of the non-aqueous electrolyte secondary battery decreases.

It is an advantage of the present disclosure to provide a non-aqueous electrolyte secondary battery that may prevent the tensile stress by tape from locally concentrating in the mixture layer owing to the expansion or contraction of the electrode plate.

A non-aqueous electrolyte secondary battery according to the present disclosure comprises an electrode assembly that includes a strip-shaped first electrode plate, and a strip-shaped second electrode plate that are spirally wound together along an electrode plate longitudinal direction with a separator interposed therebetween, wherein the first electrode plate includes a first core, and a first mixture layer formed on a surface of the first core, a rectangular first core exposed part where the first core is exposed is formed at an intermediate part of the first electrode plate in the electrode plate longitudinal direction in a portion that is in contact only with one end between opposite ends in an electrode plate short transverse direction, the first core exposed part, and a portion of the first mixture layer that is adjacent to an outer edge part of the first core exposed part are covered with tape, and a corner part of the tape on another end side in the electrode plate short transverse direction is chamfered.

According to the non-aqueous electrolyte secondary battery in the present disclosure, the tensile stress by tape may be prevented from being locally concentrated owing to the expansion or contraction of the electrode plate.

### BRIEF DESCRIPTION OF DRAWING

FIG. 1 is a sectional view taken along an axial direction of a non-aqueous electrolyte secondary battery according to an example of an embodiment.
FIG. 2 is a schematic development of a positive electrode plate to which tape is pasted according to an example of the embodiment.
FIG. 3 is a schematic development of a positive electrode plate to which tape is pasted according to another example of the embodiment.

### DESCRIPTION OF EMBODIMENT

An example of an embodiment of the present disclosure is described in detail below. In the following description, specific shapes, materials, directions, numerical values and the like are only examples for facilitating understanding of the present disclosure, and can be changed in accordance of the usage, purpose, specifications and the like as appropriate.

### [Non-Aqueous Electrolyte Secondary Battery]

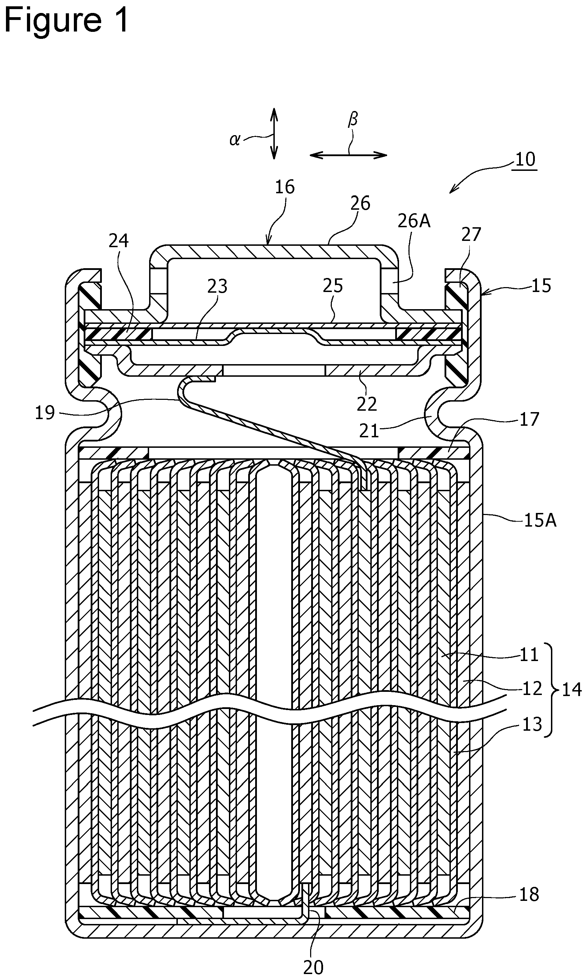

Referring to FIG. 1, a non-aqueous electrolyte secondary battery 10 that is an example of the embodiment is described.

The non-aqueous electrolyte secondary battery 10 comprises a wound-type electrode assembly 14, non-aqueous electrolyte (not shown), an outer can 15, and a sealing assembly 16. The wound-type electrode assembly 14 includes a positive electrode plate 11 that is a strip-shaped first electrode plate, a negative electrode plate 12 that is a strip-shaped second electrode plate, and a strip-shaped separator 13. The positive electrode plate 11 and the negative electrode plate 12 are spirally wound with a separator 13 interposed therebetween. The non-aqueous electrolyte contains non-aqueous solvent, and an electrolyte salt dissolved in the non-aqueous solvent. The non-aqueous electrolyte is not limited to a liquid electrolyte, and may be a solid electrolyte that contains a gel polymer or the like.

Each member is sometimes described below using an axial direction (an arrow α in FIG. 1) and a radial direction (an arrow β in FIG. 1). One side in the axial direction of the electrode assembly 14 is called "upper/upward", and the other side in the axial direction is called "lower/downward" in some cases.

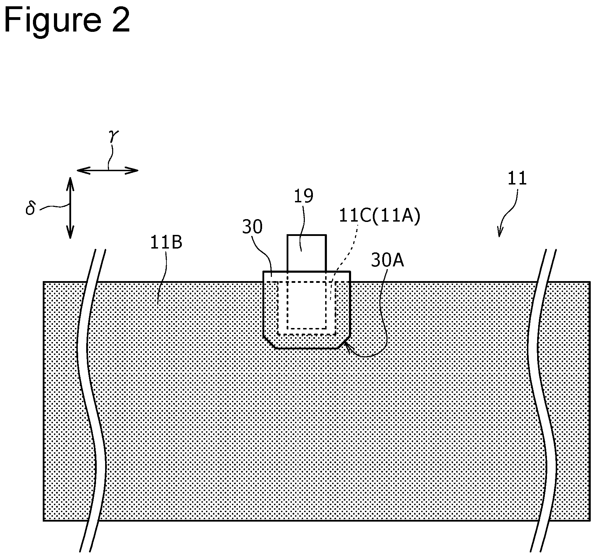

The positive electrode plate 11 as the first electrode plate includes a strip-shaped positive electrode core 11A, and a positive electrode tab 19 joined to the positive electrode core 11A (see FIG. 2). The positive electrode tab 19 is a conductive member for electrically connecting the positive electrode core 11A to a positive electrode terminal, and extends on one side (upward) in the axial direction from the upper end of the positive electrode core 11A of the electrode assembly 14. The positive electrode tab 19 is provided at, for example, a substantially center part of the electrode assembly 14 in the radial direction. The positive electrode tab 19 is a strip-shaped conductive member. The constitutional material of the positive electrode tab 19 is not specifically limited. Preferably, the positive electrode tab 19 is made of a metal that contains aluminum as a major component. Furthermore, in the positive electrode plate 11, positive electrode mixture layers 11B are formed respectively on a winding inner surface (inner surface in the radial direction) and a winding outer surface (outer surface in the radial direction) of the positive electrode core 11A (see FIG. 2).

The negative electrode plate 12 as the second electrode plate includes a strip-shaped negative electrode core, and a negative electrode tab 20 joined to the negative electrode core. The negative electrode tab 20 is a conductive member for electrically connecting the negative electrode core to the outer can 15 mentioned later, and extends from the lower end of the negative electrode core of the electrode assembly 14 on the other side (downward) in the axial direction. The outer can 15 serves as a negative electrode terminal. The negative electrode tab 20 is provided at, for example, a winding inner side portion (inner side portion) of the electrode assembly 14. The negative electrode tab 20 is a strip-shaped conductive member. The constitutional material of the negative electrode tab 20 is not specifically limited. Preferably, the negative electrode tab 20 is made of a metal that contains nickel or copper as a major component, or a metal that contains both nickel and copper. Furthermore, in the negative electrode plate 12, negative electrode mixture layers are formed respectively on the winding inner surface (inner surface in the radial direction) and the winding outer surface (outer surface in the radial direction) of the negative electrode core.

Furthermore, the negative electrode core is exposed on the outermost peripheral surface of the electrode assembly 14, is in contact with the inner side surface of the cylindrical part 15A of the outer can 15, and is electrically connected to the outer can 15. The electrical connection between the negative electrode plate 12 and the cylindrical part 15A of the outer can 15 can secure more favorable current collectability.

As described above, the electrode assembly 14 has a winding structure where the positive electrode plate 11 and the negative electrode plate 12 are spirally wound with the separator 13 interposed therebetween. The positive electrode plate 11, the negative electrode plate 12, and the separator 13 each have a strip shape, and are spirally wound together, thus coming into a state of being alternately stacked in the radial direction of the electrode assembly 14.

In the example in FIG. 1, the outer can 15 and the sealing assembly 16 constitute a battery case that is made of metal, and stores the electrode assembly 14 and the non-aqueous electrolyte. Insulating plates 17 and 18 are respectively provided above and under the electrode assembly 14. The positive electrode tab 19 extends toward the sealing assembly 16 through a through-hole in the upper insulating plate 17, and is welded to the lower surface of a filter 22 that is a bottom plate of the sealing assembly 16. In the non-aqueous electrolyte secondary battery 10, a cap 26 that is a top plate of the sealing assembly 16 that is electrically connected to the filter 22 serves as a positive electrode terminal.

The outer can 15 is a metal container that has a closed-bottom cylindrical shape with an opening portion, for example, a closed-bottom circular cylindrical shape. A gasket 27 is provided between the outer can 15 and the sealing assembly 16, and secures the hermeticity of the inside of the outer can 15. The outer can 15 includes a grooved part 21 formed by, for example, applying spinning to the side surface portion from the outside toward the inside in the radial direction. Preferably, the grooved part 21 is formed annularly along a circumferential direction of the outer can 15, and the upper surface thereof holds the sealing assembly 16. The sealing assembly 16 seals the opening portion of the outer can 15.

The sealing assembly 16 includes the filter 22, a lower vent member 23, an insulating member 24, an upper vent member 25, and the cap 26 that are sequentially stacked from a side that is closer to the electrode assembly 14. Members that constitute the sealing assembly 16 each have, for example, a disk shape or a ring shape, and the members except the insulating member 24 are electrically connected to each other. The lower vent member 23 and the upper vent member 25 are connected to each other at their center parts, and the insulating member 24 is interposed between their peripheral parts. In a case where **abnormal** heating increases the inner pressure of the battery, for example, the lower vent member 23 is broken, and the upper vent member 25 bulges toward the cap 26 and comes off the lower vent member 23, thereby breaking the electrical connection between both the members. In a case where the inner pressure further increases, the upper vent member 25 is broken, and gas is discharged outside through an opening portion 26A of the cap 26.

### [Positive Electrode Plate]

Referring to FIG. 2, the positive electrode plate 11 to which tape 30 is pasted that is an example of the embodiment is described.

The positive electrode plate 11 includes a strip-shaped positive electrode core 11A, and the positive electrode mixture layers 11B respectively formed on both the surfaces of the positive electrode core. The positive electrode plate 11 is sometimes described below using an electrode plate longitudinal direction (an arrow γ in the diagram) and an electrode plate short transverse direction (an arrow δ in the diagram). In this case, the electrode plate longitudinal direction (the arrow γ in the diagram) is a winding direction of the positive electrode plate 11, and the electrode plate short transverse direction (the arrow δ in the diagram) is the axial direction.

The positive electrode core 11A is made of, for example, foil of metal such as aluminum, or a film on which the metal is disposed as a surface layer. A preferable positive electrode core 11A may be foil of metal that contains aluminum or an aluminum alloy as a major component. The thickness of the positive electrode core 11A is greater than or equal to 10 µm and less than or equal to 30 µm, for example.

Preferably, the positive electrode mixture layer 11B contains a positive-electrode active material, a conductive agent, and a binding agent. The positive electrode plate 11 is fabricated by applying a positive electrode mixture slurry that contains a positive-electrode active material, a conductive agent, a binding agent, and a solvent such as N-methyl-2-pyrrolidone (NMP) to both the surfaces of the positive electrode core 11A, and then drying and rolling the positive electrode core 11A.

Examples of the positive-electrode active material include lithium-containing transition metal oxides that contain transition metal elements, such as Co, Mn, and Ni. Preferably, the lithium-containing transition metal oxide is a complex oxide represented by a generic formula Li₁ + ₓMO₂ (in the formula, -0.2 < x ≤ 0.2, M includes at least one of the group consisting of Ni, Co, Mn, and Al), although it is not specifically limited.

Examples of the conductive agent include carbon black (CB) such as acetylene black (AB) and Ketjenblack, and a carbon material such as graphite. Examples of the binding agent include fluororesins such as polytetrafluoroethylene (PTFE) and polyvinylidene fluoride (PVdF), polyacrylonitrile (PAN), polyimide (PI), an acrylic resin, and a polyolefin resin. Any of these resins, and carboxymethylcellulose (CMC) or a salt thereof, polyethylene oxide (PEO) and the like may be used together. One of these items can be solely used, or two or more items may be used in a combined manner.

An exposed part 11C as a rectangular positive electrode core exposed part where the positive electrode core 11A is exposed is formed at a portion of the positive electrode plate 11 that is in contact with one end between the opposite ends in the electrode plate short transverse direction. The exposed part 11C is a portion to which the positive electrode tab 19 is joined, and is a portion where the surface of the positive electrode core 11A are covered with no positive electrode mixture layer 11B. Preferably, the exposed part 11C is formed to overlap both the surfaces of the positive electrode core 11A in the thickness direction. Preferably, the length of the exposed part 11C in the electrode plate short transverse direction is greater than or equal to 5% and less than or equal to 50% of the length of the positive electrode plate 11 in the electrode plate short transverse direction.

### [Tape]

The exposed part 11C is covered with the tape 30. The tape 30 is pasted to the positive electrode mixture layer 11B around the exposed part 11C such that the tape 30 can entirely cover the exposed part 11C. That is, a portion of the positive electrode mixture layer 11B that is adjacent to the outer edge part of the exposed part 11C is covered with the tape 30 along with the exposed part 11C. In a case where the tape 30 is pasted to the exposed part 11C to which the positive electrode tab 19 is joined, the tape 30 covers part of the positive electrode tab 19. According to the tape 30, the exposed part 11C is protected, and the negative electrode plate 12 that faces the exposed part 11C is prevented from being short-circuited.

The tape 30 is adhesive tape that includes a base material layer, and an adhesive layer formed on one surface of the base material layer. For example, a heat-resistant layer that contains inorganic particles such as of metal oxide may be provided between the base material layer and the adhesive layer. The base material layer may be any of insulating resins. For example, any of PPS (polyphenylene sulfide), PEEK (polyether ether ketone), PI (polyimide), PP (polypropylene), PET (polyethylene terephthalate), PBT (polybutylene terephthalate) and the like may be used.

The adhesive layer is provided to paste the tape 30 to the surface of the positive electrode plate 11. The adhesive layer may contain at least one of the group consisting of a rubber polymer and an acrylic polymer. For example, a silicone polymer may be further added to the adhesive layer.

The tape 30 is formed to have a substantially rectangular shape. Corner parts of the tape 30 on the other end side in the electrode plate short transverse direction are chamfered, and inclined parts 30A are formed thereat. Here, chamfering is chipping of the apices of the right-angle corner parts of the rectangular tape, and for example, forming each corner part as a linear shape inclined from the electrode plate short transverse direction, or a convex curved shape toward the outside of the tape 30. Even though the corner parts of the tape 30 are chamfered, the part of the positive electrode mixture layer 11B that is adjacent to the outer edge part of the exposed part 11C is covered with the tape 30.

The corner parts of the tape 30 on the other end side in the electrode plate short transverse direction are chamfered, which at least forms no right-angle corner part. Accordingly, even if the portion of the positive electrode mixture layer 11B to which the tape 30 is pasted is pulled owing to expansion or contraction of the positive electrode plate 11, the tensile stress is not locally concentrated on the corner parts of the pasting portion of the tape 30 on the positive electrode mixture layer 11B, and the positive electrode mixture layer 11B can be prevented from coming off or being cracked. Note that the inclination angle from the electrode plate short transverse direction of each inclined part 30A in the present embodiment is substantially 45°. However, the inclination angle of the inclined part 30A in the present disclosure is not specifically limited.

### [Another Embodiment]

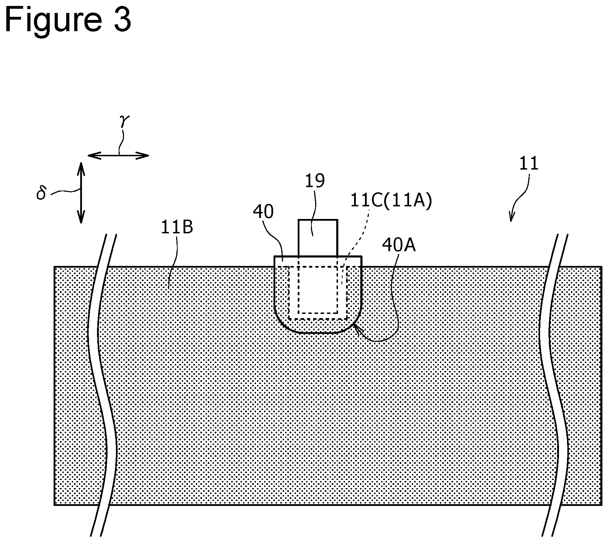

Referring to FIG. 3, tape 40 that is another example of the embodiment is described. To describe the tape 40, configuration points different from those of the aforementioned tape 30 are described, and description of configuration points similar to those of the tape 30 is omitted.

The tape 40 is formed to have a substantially rectangular shape. Corner parts of the tape 40 on the other end side in the electrode plate short transverse direction are chamfered, and curved parts 40A are formed thereat. Even though the corner parts of the tape 40 are chamfered, part of the positive electrode mixture layer 11B that is adjacent to the outer edge part of the exposed part 11C is covered with the tape 30. The chamfering of the tape 40 on the other end side in the electrode plate short transverse direction in a curved manner forms no right-angle corner part. Accordingly, even if the portion of the positive electrode mixture layer 11B to which the tape 40 is pasted is pulled owing to expansion and contraction of the positive electrode plate 11, there is no position where the tensile stress is concentrated on the outer peripheral part of the portion of the positive electrode mixture layer 11B to which the tape 40 is pasted, and the positive electrode mixture layer 11B can be prevented from coming off or being cracked.

Note that the present disclosure is not limited to the embodiment described above and their modified examples. It is a matter of course that various changes and modifications can be made in the range of description in the claims of the present application. For example, a configuration may be adopted where a rectangular negative electrode core exposed part where the negative electrode core is exposed is formed at a portion of the negative electrode plate that is in contact only with one end in the electrode plate short transverse direction, the tape is pasted to the negative electrode core exposed part, and the corner parts of the tape on the other side in the electrode plate short transverse direction are chamfered.

### REFERENCE SIGNS LIST

10 Non-aqueous electrolyte secondary battery, 11 Positive electrode plate (first electrode plate), 11A Positive electrode core (first electrode core), 11B Positive electrode mixture layer (first electrode mixture layer), 11C Exposed part (first electrode core exposed part), 12 Negative electrode plate (second electrode plate), 13 Separator, 14 Electrode assembly, 15 Outer can, 15A Cylindrical part, 16 Sealing assembly, 17 Insulating plate, 18 Insulating plate, 19 Positive electrode tab, 20 Negative electrode tab, 21 Grooved part, 22 Filter, 23 Lower vent member, 24 Insulating member, 25 Upper vent member, 26 Cap, 26A Opening portion, 27 Gasket, 30 Tape, 30A Inclined part, 40 Tape, 40A Curved part

## Claims

1. A non-aqueous electrolyte secondary battery, comprising
an electrode assembly that includes a strip-shaped first electrode plate, and a strip-shaped second electrode plate that are spirally wound together along an electrode plate longitudinal direction with a separator interposed therebetween, wherein
the first electrode plate includes a first core, and a first mixture layer formed on a surface of the first core,
a rectangular first core exposed part where the first core is exposed is formed at an intermediate part of the first electrode plate in the electrode plate longitudinal direction in a portion that is in contact only with one end between opposite ends in an electrode plate short transverse direction,
the first core exposed part, and a portion of the first mixture layer that is adjacent to an outer edge part of the first core exposed part are covered with tape, and
a corner part of the tape on another end side in the electrode plate short transverse direction is chamfered.

2. The non-aqueous electrolyte secondary battery according to claim 1, wherein
the corner part of the tape is chamfered in an outward convex curved manner.

3. The non-aqueous electrolyte secondary battery according to claim 1 or 2, wherein
the first electrode plate is a positive electrode plate.
